# EUROPEAN PATENT APPLICATION

(11) **EP 1 113 546 A1**
(43) Date of publication of application: **04.07.2001**
(21) Application number: 99204599.7
(22) Date of filing: 30.12.1999
(51) Int. Cl.: H02B 5/00, H01H 9/00, H01F 29/04

(54) **Electric substation**

(71) Applicant: ABB T&D Technologies Ltd., 8059 Zürich (CH)
(72) Inventor: Sfondrini, Libero, 26900 Lodi (IT); Sciacca, Aldo, 20097 S. Donato Milanese, Milano (IT); Volponi, Silvia, 20033 Desio, Milano (IT)
(74) Representative: Giavarini, Francesco

(57) **Abstract**

An electric transmission and/or distribution substation connected to a multi-phase power line, comprising:
- a transformer having a tank which contains a magnetic core, electric windings and a first dielectric fluid;
- a selector for regulating the voltage ratio of the transformer;
- an integrated switching device comprising a casing which contains a second dielectric fluid, a first switching unit having a first and a second contacts which can couple/uncouple to each other, a second switching unit having a third moving contact and a plurality of fourth fixed contacts which can couple/uncouple to said third moving contact; one of said first or second contacts is electrically connected to the power line and the other is electrically connected to the transformer windings. The third moving contact is electrically connected to the star center of the transformer, the plurality of fourth fixed contacts is connected to the transformer windings through the selector.

Actuation means are operatively connected to one of said first or second contact and to said third moving contact through an insulated operating member.

## Description

The present invention relates to an electric transmission and/or distribution substation.

In particular, the substation according to the invention, thanks to the structure of some of its components, allows reducing the number of components and the maintenance needs. Moreover, land occupation and visual impact can be reduced with respect to conventional substations, by applying a solution that is unique in its simplicity and effectiveness both from the point of view of production costs and of practical applications.

It is known that conventional substations use one or more power and/or distribution transformers, which are electrically connected, on one side, to the phases of a high-voltage power line, and on the other side, to a plurality of medium- and low voltage equipment.

In particular, each transformer comprises a tank, which contains a magnetic core, electric windings, and an insulating fluid; further, each transformer is equipped with a plurality of bushings that allow electrical connections with the phase conductors and with the medium-and low voltage equipment.

An on-load tap changer, which comprises a selector and a diverter switch, is operatively connected to the transformer; the on-load tap changer, which can be positioned inside or outside the tank, is suitable to vary the transformation ratio of the transformer so that the voltage supplied to the medium-and low voltage equipment can be appropriately regulated. In particular: the selector of the on-load tap changer has the task to change without load the position of the voltage regulation from one tap of the winding to the following one; the diverter switch, which acts on load after the selector positioning, has the task to switch the current from one pointer of the selector to another one through auxiliary contacts and limiting resistances connected in parallel to each pointer.

The electrical connection between transformers and phase conductors is realised by the interposition of a plurality of switchgear elements, such as circuit breakers and disconnectors, which allow the realisation of different electrical schemes according to the applications, and ensure the correct functioning of the substation.

At the present state of the art, the connections between transformers and switchgear elements are realised according to two main configurations, which have some drawbacks and disadvantages.

In particular, according to a first solution, the switchgear elements are disposed on the substation yard and are connected to the bushings of the transformer by means of conductor systems, such as busbars. In this case, the presence of conductors, which are positioned in air, causes a significant increase of the overall dimension of the substation, thus negatively increasing the land occupation and the visual impact; furthermore, the presence of busbars in air makes it necessary the use of busbars protections, for example against lightning, and frequent maintenance interventions.

In a second solution, known in the art as "GIS" ("Gas Insulated Substation"), the switchgear elements are positioned inside a metal-clad casing which is filled with a pressurized dielectric gas, generally sulphur exafluoride (SF₆); further, also the conductors which connect the switchgear elements and the bushings of the transformer are housed, at least partially, in gas insulated ducts.

Although this solution is constructively compact and functionally effective, it needs a significant amount of SF₆, in order to provide the required insulation; this kind of gases, besides requiring a particular structure, which is extremely expensive and therefore effects the costs of the substation, have a negative environmental impact. As a matter of fact, it is necessary to adopt particular safety systems in order to avoid and/or indicate any losses and leaks of the gas; in this cases, losses and consequent leaks of the gas might in fact cause malfunctions of the substation and environmental contamination problems; moreover, frequent maintenance interventions are also required.

This obviously has a negative impact on the constructive complexity of the substation and on its overall reliability; furthermore, with this solution the substation has a structure, which is not easily transportable and requires significant installation time, which can not be prefabricated and, once installed, can not be relocated.

Independently of their layout, electric substations require frequent maintenance because of on-load tape changer operations in mineral oil, which is the most widely used insulating medium for power transformer. As it is known from the state of the art, the diverter switch has the task to break small currents very often during even a single day, thus enhancing degradation of both insulating oil and its own contact. Moreover the diverter switch usually has a complex mechanism and need proper actuation means.

In order to reduce maintenance requirements of on-load tape changers, vacuum diverter switches have been developed, but this solution is neither technically simple nor economically convenient in many cases.

The aim of the present invention is to realise an electric transmission and/or distribution substation which allows to reduce its maintenance needs and number of components by using an integrated switching device able to perform both the function of line breaking and diverting switch. Moreover, the overall dimension of the substation can be reduced by applying a compact layout, thus allowing reducing the land occupation and the visual impact when compared to conventional substations.

Within the scope of this aim, an object of the present invention is to realize an electric transmission and/or distribution substation whose structure, at least partially, can be easily transported on the installation site, and, once installed, can be easily relocated.

A further object of the present invention is to realize an electric transmission and/or distribution substation that allows reducing the installation time.

A further object of the present invention is to realise an electric transmission and/or distribution substation, which allows reducing maintenance interventions and use of protection systems.

A further object of the present invention is to realize an electric transmission and/or distribution substation that is highly reliable, relatively easy to manufacture and at low costs.

This aim, these objects and others which will become apparent hereinafter are achieved by an electric transmission and/or distribution substation connected to a multi-phase power line, characterized in that it comprises:
- a transformer having a tank which contains a magnetic core, electric windings and a first dielectric fluid;
- a selector for regulating the voltage ratio of the transformer;
- an integrated switching device comprising a casing which contains a second dielectric fluid, a first switching unit having a first and a second contacts which can couple/uncouple to each other, a second switching unit having a third moving contact and a plurality of fourth fixed contacts which can couple/uncouple to said third moving contact, being one of said first or second contacts electrically connected to the power line and the other being electrically connected to the transformer windings, the third moving contact being electrically connected to the star center of the transformer, the plurality of fourth fixed contacts being connected to the transformer windings through the selector; and first actuation means which are operatively connected to one of said first or second contact and to said third moving contact through an insulated operating member.

In this way, a single and compact device performs both the line interruption function and the diverter switch maneuvers for the voltage ratio regulation.

In addition, adopting a compact layout for the transformer bay, as directly connecting the integrated switching device to the transformer tank, or positioning the switching device inside the tank, a unique substation module can be formed. The substation module can be easily prefabricated, transported and, if necessary, relocated from one site to another one.

Further characteristics and advantages of the invention will become apparent from the description of preferred embodiments of the electric substation according to the invention, illustrated only by way of non-limitative example in the accompanying drawings, wherein:
Figure 1 is an electrical scheme illustrating a first embodiment of the electric transmission and/or distribution substation, according to the invention;
Figure 2 is an electrical scheme illustrating a second embodiment of the electric transmission and/or distribution substation, according to the invention.

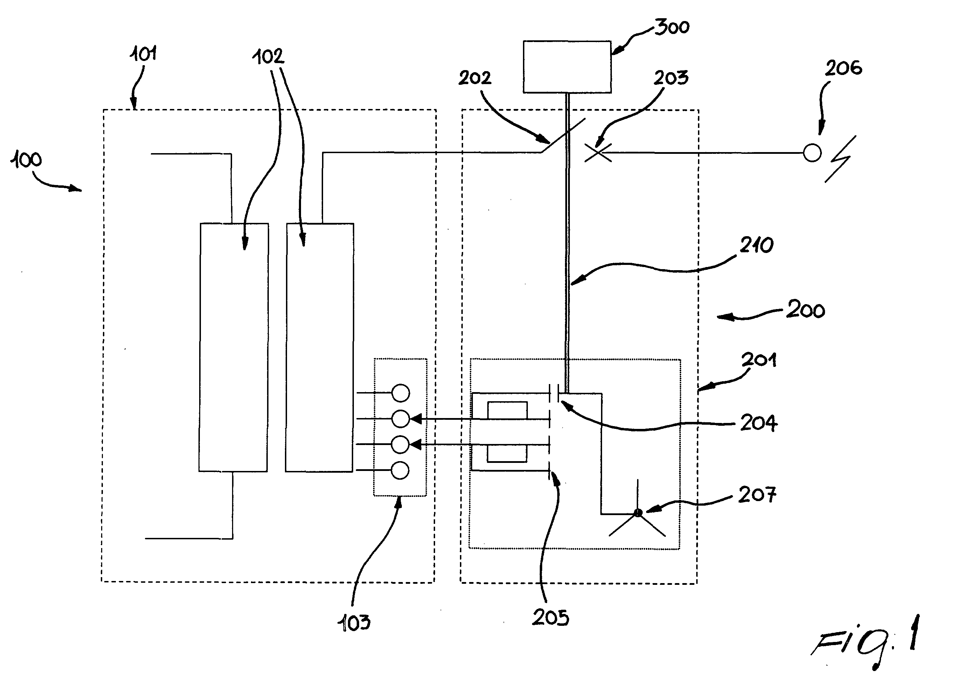

With reference to figure 1, the electric substation according to the invention comprises a power and/or distribution transformer, designated by the reference numeral 100. The transformer 100 has a tank 101 which contains a first dielectric fluid having mainly an insulation function, a magnetic core, which is not shown in the figure, and electric windings 102. A selector 103 for regulating the voltage ratio of the transformer is positioned on the neutral side of the high voltage windings. The integrated switching device 200 comprises a casing 201 and a first switching unit having a first 202 and a second 203 contacts which can couple/uncouple to each other. In the embodiment of figure 1 the first switching unit is a circuit breaker having one of the contacts (203 in the present case) electrically connected to the power line 206, the other (202 in the present case) being electrically connected to the transformer windings 102. The integrated switching device further comprises a second switching unit having a third moving contact 204 and a plurality of fourth fixed contacts 205 which can couple/uncouple to the moving contact 204. The third moving contact 204 is electrically connected to the star centre 207 of the transformer and the contacts 205 are electrically connected to the transformer windings through the selector 103. The integrated switching device further comprises actuation means 300 which are operatively connected to one of said contacts 202 or 203 and to the moving contact 204 through an insulated operating member 210. The integrated switching device thus conceived, allows to perform both the function of line breaking and diverting switch, so that the voltage supplied by the transformer can be adjusted according to the requirements of the service and the line can be interrupted in case of short circuit or any other operation need. The interruptive function can be performed in concomitance with any voltage regulation operation.

The functioning of the transformer 100 is well known in the art and therefore it will not be further described.

The integrated switching device can be positioned inside the transformer tank. In the preferred but not exclusive embodiment shown in figure 1, the device 200 is positioned outside the tank 101, and is connected to and mechanically supported by said tank. The electrical connection between the contact 202 and the transformer windings can be realised through at least one high voltage bushing.

Applying this layout, the overall dimension of the transformer bay in particular, and of the substation in general, is drastically reduced, with a very simple and effective solution. In fact, the bushings of the transformer 100, along the power line side, and the busbars which connect electrically the transformer itself and the interruption elements, are completely eliminated, thus reducing the number of components in air, the maintenance interventions required, and consequently increasing the overall reliability of the substation. Further, the transformer 100 and the integrated switching device 200, possibly enclosed into a single vessel, form a module which can be easily transported and relocated.

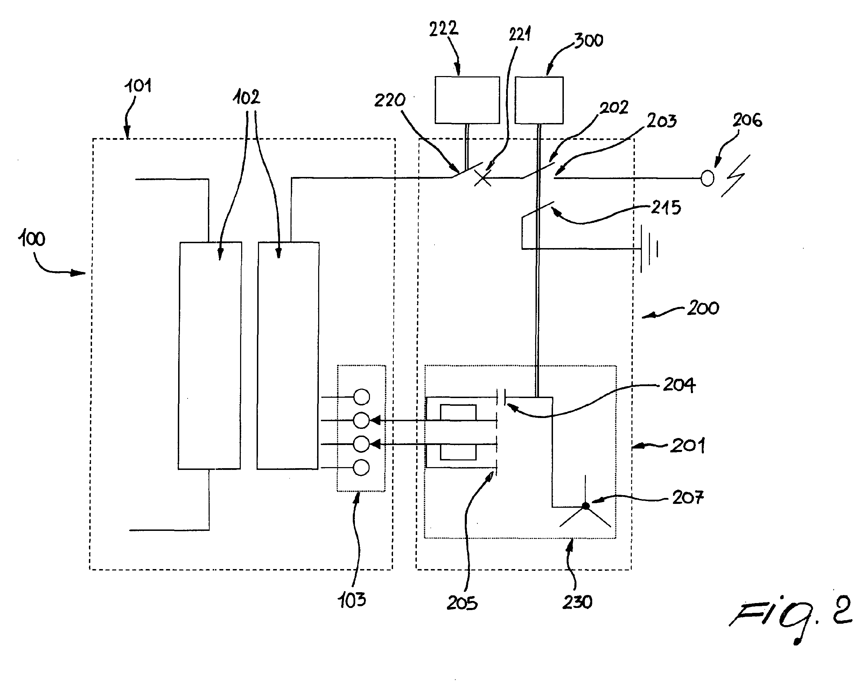

A second embodiment of the electric transmission and/or distribution substation according to the invention will be now described with reference to figure 2. In said figure, elements already described in figure 1 are designated with the same reference numeral and will not described again. In this embodiment, the first switching unit is a disconnector, whose contacts 202 and 203 are electrically connected to the power line 206 and to the transformer windings 102. A third switching unit, in this case a circuit breaker having a couple of contacts 220 and 221, is interposed between the disconnector and the transformer windings. The disconnector can comprise a further contact 215 for earthing operations. Conveniently, operation of the circuit breaker is actuated by second actuation means 222.

The second switching unit can be insulated using the dielectric fluid present in the casing 201 or alternatively it can be enclosed in a casing 230 containing a third dielectric fluid, which can be the same of or different from said first and/or second dielectric fluid.

The dielectric fluids can be constituted by non-flammable fluids, in particular by a dielectric fluorinated fluid, such as sulphur hexafluoride (SF₆). Alternatively, the dielectric fluorinated fluid can be chosen among the group constituted by perfluorocarbons, or fluorocarbons or perfluoropolyethers; in particular, the use of perfluoropolyethers allows to increase safety and non-flammability of the transformer bay, and to reduce the environmental impact.

In case of different fluids, the first dielectric fluid can comprise a mineral oil, or a vegetal oil, or a perfluoropolyether, and the second and/or the third dielectric fluid can comprise a mixture of sulphur hexafluoride and nitrogen, or pure nitrogen gas; clearly, other combinations can be adopted.

Further, the first actuation means and/or the second actuation means can comprise a motor with position control; in particular, the use of a servomotor entails considerable advantages in terms of precision and speed of execution of the operations.

As an alternative, it is possible to use mechanical, or electromechanical, or pneumatic, or hydraulic actuation means.

Considering the various phases of the power line, the first actuation means can comprise a single motor with position control, operatively connected to the insulated operating members of each phase, according to a solution which is cheap and effective at the same time. Alternatively, the first actuation means can comprise, for each phase, a motor with position control, operatively connected to the insulated operating members of the corresponding integrated switching device 200.

In practice it has been found that the electric substation according to the invention allows to achieve the intended aim and objects, since it is composed by a reduced number of components and the switching of load current from one tap to another is performed in a most reliable way, thus reducing maintenance needs. Moreover the electric substation can be realised according to a very compact layout which allows reducing the land occupation and the visual impact, that can be prefabricated, easily transported and even relocated.

The electric substation thus conceived is susceptible of numerous modifications and variations, all of which are within the scope of the inventive concept; for example, other components, such as measuring transformers and/or various kind of protections, can be positioned inside the casing. All the details may also be replaced with other technically equivalent elements.

In practice, the materials employed, so long as they are compatible with the specific use, as well as the dimensions, may be any according to the requirements and to the state of the art.

## Claims

1. An electric transmission and/or distribution substation connected to a multi-phase-power line, characterized in that it comprises:
- a transformer having a tank which contains a magnetic core, electric windings and a first dielectric fluid;
- a selector for regulating the voltage ratio of the transformer;
- an integrated switching device comprising a casing which contains a second dielectric fluid, a first switching unit having a first and a second contacts which can couple/uncouple to each other, a second switching unit having a third moving contact and a plurality of fourth fixed contacts which can couple/uncouple to said third moving contact, being one of said first or second contacts electrically connected to the power line and the other being electrically connected to the transformer windings, the third moving contact being electrically connected to the star center of the transformer, the plurality of fourth fixed contacts being connected to the transformer windings through the selector; and first actuation means which are operatively connected to one of said first or second contact and to said third moving contact through an insulated operating member.

2. An electric substation according to claim 1 characterized in that said casing is directly connected to and mechanically supported by said tank

3. An electric substation according to claim 2 characterized in that the electric connection between said first or second contact and the transformer windings is realized through at least a high voltage bushing.

4. An electric substation according to claim 1 characterized in that said casing is positioned inside the transformer tank.

5. An electric substation according to one or more of the preceding claims, characterized in that said first switching unit is a circuit breaker.

6. An electric substation according to one or more of claims from 1 to 4, characterized in that said first switching unit is a disconnector, the integrated switching device further comprising a third switching unit having a fifth and a sixth contacts which can couple/uncouple to each other, said third switching unit being interposed between said first switching unit and the transformer windings.

7. An electric substation according to one or more of the preceding claims characterized in that said second switching unit is enclosed in a casing containing a third dielectric fluid.

8. An electric substation according to one or more of the preceding claims characterized in that said first actuation means comprise, for each phase, a motor with position control.

9. An electric substation according to one or more of the preceding claims characterized in that said first actuation means comprise a single motor with position control, operatively connected to the insulated operating member of each phase.
